# FASCICULE DE BREVET EUROPEEN

(11) **EP 4 091 429 B1**
(45) Date de publication et mention de la délivrance du brevet: **04.09.2024**
(21) Numéro de dépôt: 22173525.1
(22) Date de dépôt: 16.05.2022
(51) Int. Cl.: A01D 78/10, A01B 73/04

(54) **MACHINE DE FENAISON À MULTIPLES SEGMENTS**
HEUWENDEMASCHINE MIT MEHREREN SEGMENTEN
MULTI-SEGMENTED HAYMAKING MACHINE

(30) Priorité: 18.05.2021 FR 2105155
(43) Date de publication de la demande: 23.11.2022
(73) Titulaire: Kuhn SAS, 67700 Saverne (FR)
(72) Inventeur: KOEPPEL, Frédéric, 67270 HOCHFELDEN (FR)
(74) Mandataire: Hager, Esther Evelyne

(56) Documents cités:
- EP-A1- 0 534 127
- EP-A1- 3 788 862
- EP-B1- 0 951 818
- EP-B1- 2 366 272
- DE-U1- 9 111 676

## Description

La présente invention porte sur une machine agricole se déplaçant selon une direction d'avance en utilisation et comprenant un châssis et deux groupes latéraux, chaque groupe latéral étant articulé au châssis de part et d'autre du châssis de manière à pouvoir pivoter autour d'un premier axe de débattement sensiblement parallèle à la direction d'avance. Chaque groupe latéral comprend plusieurs rotors, chacun étant animé en rotation autour d'un axe de rotation et supporté par un appui. Les rotors d'un groupe latéral sont articulés entre eux autour d'au moins un deuxième axe de débattement et d'un troisième axe de débattement sensiblement parallèles à la direction d'avance et autour d'un axe d'orientation sensiblement vertical. Chaque groupe latéral peut adopter une configuration déployée d'utilisation dans laquelle les axes de rotation de ses rotors sont compris dans un même plan, et une configuration de transport dans laquelle ces axes de rotation sont sensiblement horizontaux.

Une telle machine est par exemple connue du document EP0534127. Une telle machine est également connue du document DE 9111676. Sur ces machines, les axes d'articulation de la machine divulguée par ce document permettent, dans la configuration de transport, qu'un plan passant par les axes de rotation des troisièmes et quatrièmes rotors forme un angle droit avec un plan passant par les axes de rotation des deuxièmes et troisièmes rotors. Un inconvénient majeur de cette machine est son importante hauteur en configuration de transport. En outre, ajouter des rotors aux groupes latéraux d'une machine selon le document EP0534127 impliquerait une longueur importante en configuration de transport. De plus, avec une machine selon le document EP0534127 comportant plus de rotors par groupe latéral, les efforts dans la structure induits par le poids des rotors seraient particulièrement importants en configuration de transport.

La présente invention a pour but principal de pallier les inconvénients précités et propose à cet effet, pour une machine du type évoqué en introduction, que chaque groupe latéral comprend au moins quatre rotors, que l'axe d'orientation est situé entre le deuxième axe de rotation et le quatrième axe de rotation à partir du châssis, que des rotors dits orientables peuvent pivoter par rapport au châssis autour de l'axe d'orientation selon un angle compris entre 20° et 60°, et que chaque groupe latéral comprend une partie intérieure comportant le premier rotor et le deuxième rotor à partir du châssis et une partie extérieure comportant au moins les deux derniers rotors à partir du châssis, la partie extérieure pouvant pivoter entre une position à côté et une position au-dessus de la partie intérieure en vue selon la direction d'avance.

L'invention vise également un procédé de transposition d'un groupe latéral d'une machine agricole du type évoqué ci-dessus.

L'invention sera mieux comprise, grâce à la description ci-après, qui se rapporte à des variantes de réalisation préférées, données à titre d'exemples non limitatifs, et expliquées avec référence aux dessins schématiques annexés, dans lesquels :
[Fig. 1],
[Fig. 2] et
[Fig. 3] représentent partiellement, respectivement en vue de dessus, en vue arrière et en vue en élévation latérale, une machine agricole selon un premier mode de réalisation de l'invention, ce en configuration déployée, la machine de la figure 3 étant attelée à un tracteur ;
[Fig. 4] et
[Fig. 5] sont des vues partielles de dessus et à une échelle différente de segments et de la ligne de transmission de mouvement d'un groupe latéral faisant partie de la machine des figures 1 à 3, respectivement en configuration déployée dudit groupe latéral (figure 4) et après pivotement des rotors orientables autour de l'axe d'orientation (figure 5) ;
[Fig. 6A],

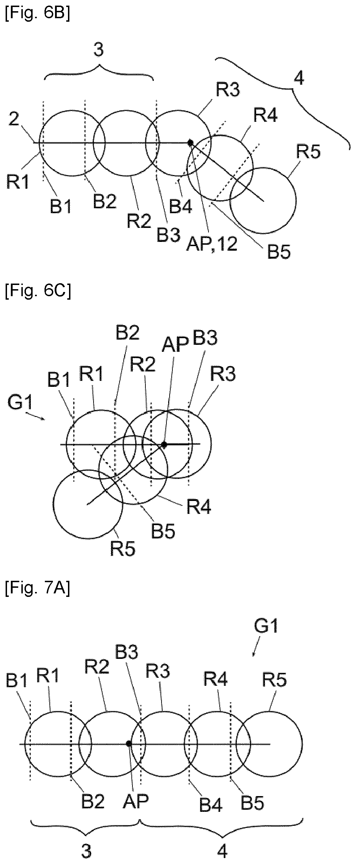

[Fig. 6B] et
[Fig. 6C] sont des vues schématiques de dessus d'un groupe latéral d'une machine selon un mode de réalisation préféré, respectivement en configuration déployée (6A), après pivotement des rotors orientables autour de l'axe d'orientation (6B) et après pivotement de la partie extérieure au-dessus de la partie intérieure (6C) ;
[Fig. 7A],

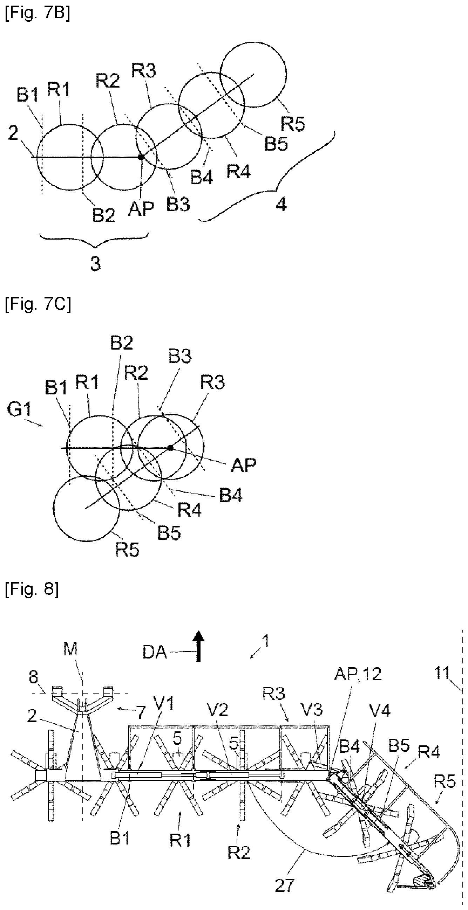

[Fig. 7B] et
[Fig. 7C] sont des vues schématiques de dessus d'un groupe latéral d'une machine agricole selon une première variante de réalisation de l'invention, respectivement en configuration déployée (7A), après pivotement des rotors orientables autour de l'axe d'orientation (7B) et après pivotement de la partie extérieure au-dessus de la partie intérieure (7C) ;
[Fig. 8] est une vue partielle de dessus d'une machine selon l'invention avec un unique groupe latéral dans une configuration telle qu'illustrée sur la figure 6B ;

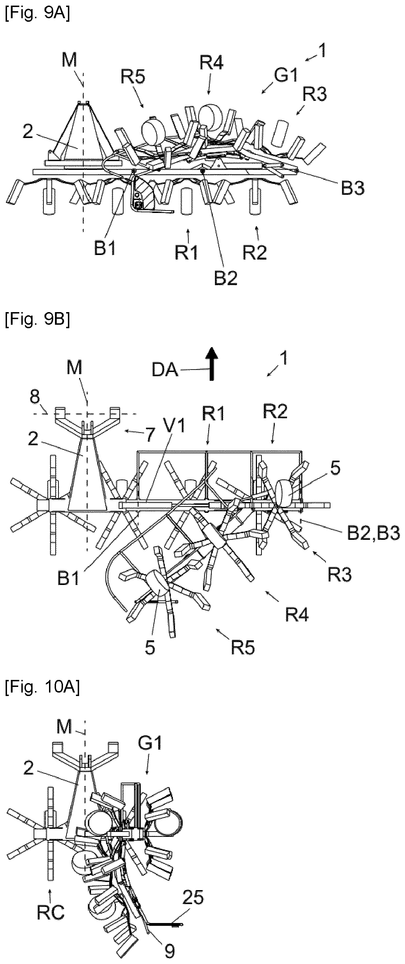

[Fig. 9A] et
[Fig. 9B] sont des vues respectivement arrière et de dessus de la machine représentée figure 8 après pivotement de la partie extérieure du groupe latéral au-dessus de sa partie intérieure ;
[Fig. 10A],

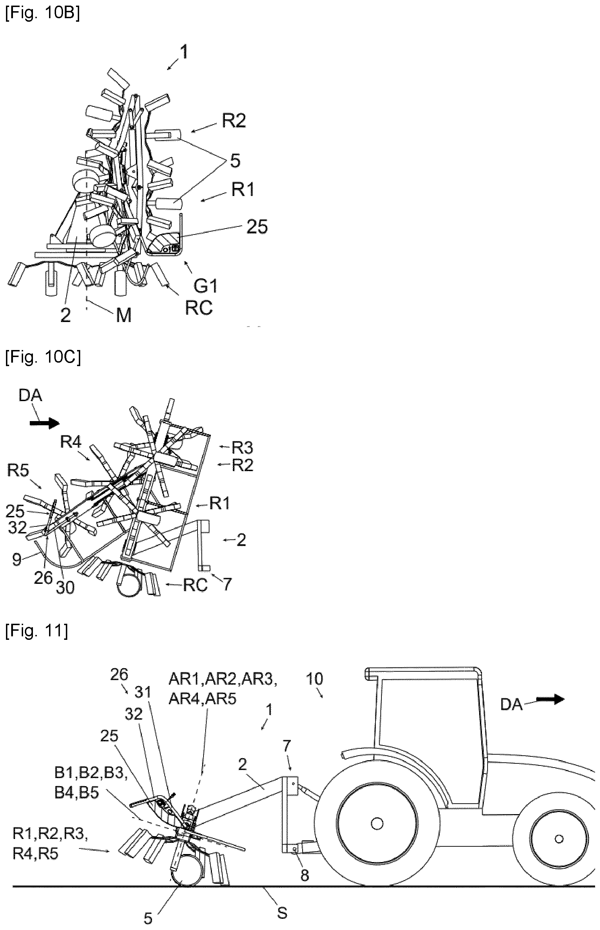

[Fig. 10B] et
[Fig. 10C] sont respectivement des vues de dessus, arrière et en élévation latérale de la machine représentée figures 8 et 9 lorsqu'elle est en configuration de transport (configuration entièrement repliée), et,

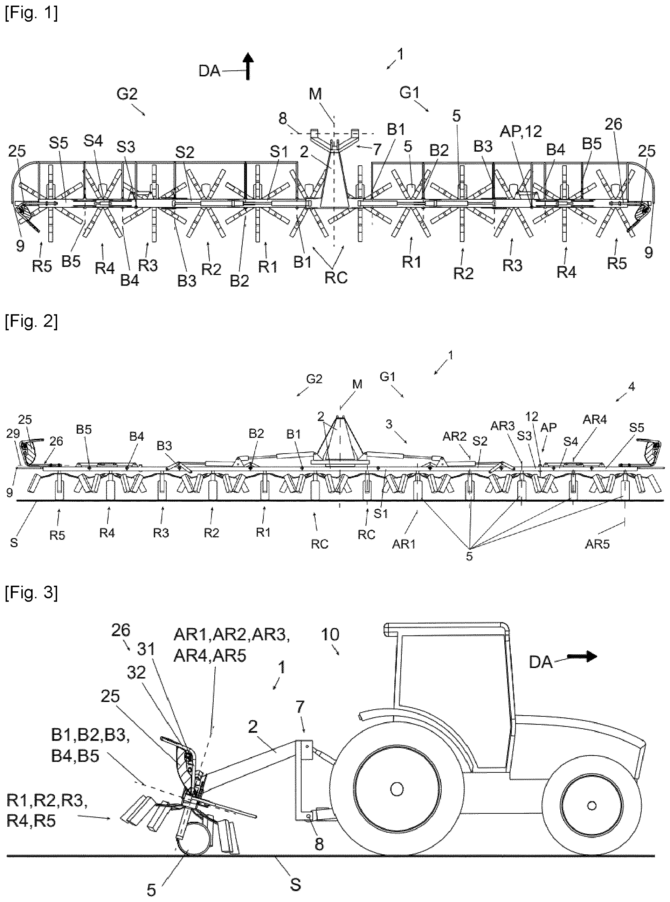

[Fig. 11] est une vue latérale similaire à la figure 3 dans laquelle le panneau de signalisation est escamoté.

Les figures 1 à 3 et 6 à 11 illustrent toutes, au moins en partie, une machine agricole (1) se déplaçant selon une direction d'avance (DA) en utilisation et comprenant un châssis (2) et deux groupes latéraux (G1, G2). Chaque groupe latéral (G1, G2) est articulé de part et d'autre du châssis (2) de manière à pouvoir pivoter autour d'un premier axe de débattement (B1) sensiblement parallèle à la direction d'avance (DA).

Chaque groupe latéral (G1, G2) comprend plusieurs rotors (R1, R2, R3, R4, R5). Chaque rotor (R1, R2, R3, R4, R5) est animé en rotation autour d'un axe de rotation (AR1, AR2, AR3, AR4, AR5) et supporté par un appui (5). Les rotors (R1, R2, R3, R4, R5) de chaque groupe latéral (G1, G2) sont articulés entre eux autour d'au moins un deuxième axe de débattement (B2) et d'un troisième axe de débattement (B3) sensiblement parallèles à la direction d'avance (DA) et autour d'un axe d'orientation (AP) sensiblement vertical, en configuration déployée. Chaque groupe latéral (G1, G2) peut adopter une configuration déployée d'utilisation dans laquelle les axes de rotation (AR1, AR2, AR3, AR4, AR5) de ses rotors (R1, R2, R3, R4, R5) sont compris dans un même plan. Chaque groupe latéral (G1, G2) peut adopter une configuration de transport dans laquelle ces axes de rotation (AR1, AR2, AR3, AR4, AR5) sont sensiblement horizontaux.

Conformément à l'invention, chaque groupe latéral (G1, G2) comprend au moins quatre rotors (R1, R2, R3, R4, R5), permettant d'augmenter la largeur de travail et donc de travailler plus de surface lors d'un passage ou d'une utilisation de la machine (1), accélérant ainsi le chantier agricole. La largeur (cf. figures 1 et 2) est à considérer horizontalement et perpendiculairement à la direction d'avance (DA). La machine (1) peut également comporter deux rotors centraux (RC), ces derniers étant portés directement par le châssis (2). Ainsi, la machine agricole (1) comporte au moins dix rotors, à savoir au moins huit (2x4) rotors au niveau desdits groupes latéraux (G1, G2) et deux rotors centraux (RC). Afin d'augmenter encore la largeur de travail en configuration déployée, ce sans complexifier davantage la machine (1) et tout en conservant des dimensions réduites en configuration de transport, chaque groupe latéral (G1, G2) peut comprendre avantageusement, tel que représentée sur les figures 1, 6A et 7A notamment, cinq rotors (R1, R2, R3, R4, R5). En effet, ainsi qu'il ressort de la figure 1, en configuration déployée, chaque groupe latéral (G1, G2) s'étend transversalement, et de préférence perpendiculairement, à la direction d'avance (DA).

Également en accord avec l'invention, l'axe d'orientation (AP) est situé entre le deuxième axe de rotation (AR2) et le quatrième axe de rotation (AR4) à partir du châssis (2). De plus, des rotors dits orientables (R3, R4, R5) peuvent pivoter par rapport au châssis (2) autour de l'axe d'orientation (AP) selon un angle compris entre 20° et 60°. Les rotors orientables (R3, R4, R5) d'un groupe latéral (G1, G2) sont donc ceux pouvant pivoter autour de l'axe d'orientation (AP) par rapport au châssis (2), respectivement par rapport aux autres rotors. Le fait de pouvoir pivoter les rotors orientables (R3, R4, R5) autour de l'axe d'orientation (AP) selon un angle d'au moins 20° permet de diminuer l'encombrement du groupe latéral (G1, G2) selon une direction perpendiculaire à la direction d'avance (DA). La hauteur de la machine en configuration de transport peut donc être moindre. L'angle de pivotement des rotors orientables (R3, R4, R5) autour de l'axe d'orientation (AP) étant inférieur à 60°, la dimension d'un groupe latéral (G1, G2) selon la direction d'avance (DA) en configuration de transport est réduite. Il en résulte une réduction de la longueur de la machine (1) en configuration de transport. En outre, plus l'angle de pivotement des rotors orientables (R3, R4, R5) autour de l'axe d'orientation (AP) est important, plus importants seront les efforts liés au poids des rotors orientables (R3, R4, R5) en configuration de transport. Avec une telle disposition, la structure du groupe latéral (G1, G2) est moins sollicitée.

Toujours selon l'invention, chaque groupe latéral (G1, G2) comprend une partie intérieure (3) comportant le premier rotor (R1) et le deuxième rotor (R2) à partir du châssis (2) et une partie extérieure (4) comportant au moins les deux derniers rotors (R3, R4, R5) à partir du châssis (2). De surcroit, chaque partie extérieure (4) peut pivoter entre une position à côté (latéralement à l'extérieur-configuration déployée) de la partie intérieure (3) et une position au-dessus (superposée-configuration repliée de transport) de ladite partie intérieure (3), au moins en vue selon la direction d'avance (DA). Déplacer ainsi la partie extérieure (4) au-dessus de la partie intérieure (3), permet de diminuer encore davantage la dimension du groupe latéral (G1, G2) selon une direction horizontale et perpendiculaire à la direction d'avance (DA), résultant en une hauteur moindre en configuration de transport. Le cas échéant, c'est bien sûr la partie extérieure (4) qui comporte le cinquième rotor (R5).

Ainsi, l'invention permet que la largeur de travail de la machine (1) soit importante en configuration déployée d'utilisation tout en présentant des dimensions réduites en configuration de transport. L'encombrement en configuration de transport permet ainsi de respecter la majorité des normes et réglementation en vigueur, et de limiter les porte-à-faux.

En vue d'éviter de nombreuses itérations des termes « à partir du châssis (2) », il est spécifié que chaque élément doté d'un numéro d'ordre est à considérer à partir du châssis (2). Par exemple, le premier rotor (R1) d'un groupe latéral (G1, G2) est situé, en configuration déployée, entre le châssis (2) et le deuxième rotor (R2) du même groupe latéral (G1, G2). Le deuxième rotor (R2) est, lui, situé entre les premier (R1) et troisième (R3) rotors du même groupe latéral (G1, G2) en configuration déployée, etc. Il en va de même pour les axes de rotation, les axes de débattement, et les segments. Par ailleurs, dans ce document, l'intérieur fait référence au centre de la machine (1), plus exactement à son plan médian (M), passant par le châssis (2).

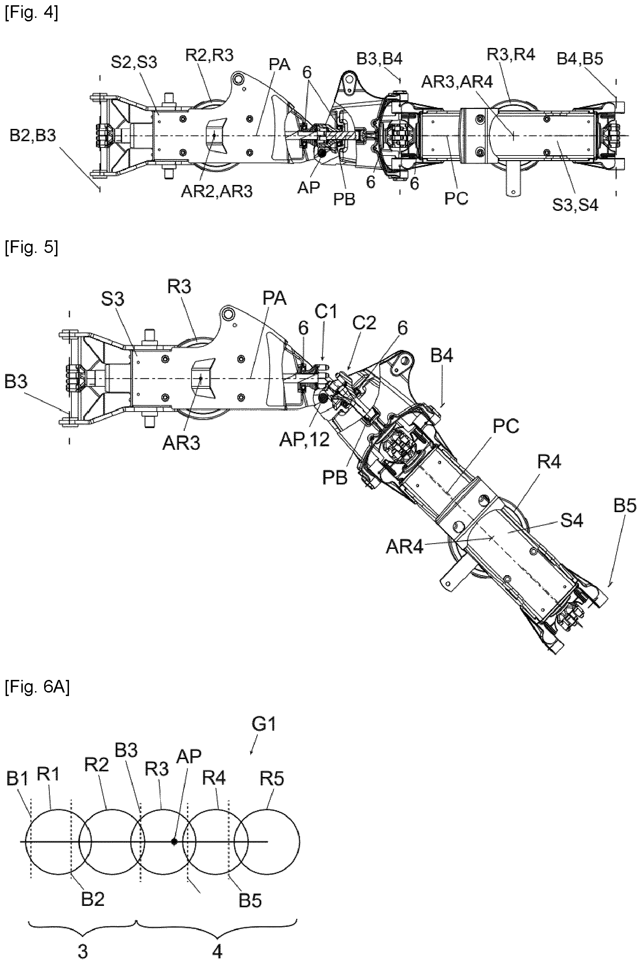

Il ressort des figures 1 et 2 notamment, que la structure de chaque groupe latéral (G1, G2) est formée par des segments (S1, S2, S3, S4, S5) portant les rotors (R1, R2, R3, R4, R5). Le premier segment (S1) de chaque groupe latéral (G1, G2) est relié au châssis (2) par le premier axe de débattement (B1). Chaque groupe latéral (G1, G2) peut ainsi pivoter par rapport au châssis (2) autour dudit premier axe de débattement (B1). Le groupe latéral (G1, G2), respectivement le premier segment (S1), pourrait aussi être articulé avec le châssis (2) par une rotule permettant de pivoter autour du premier axe de débattement (B1). Deux rotors (R1, R2, R3, R4, R5) sont dits adjacents lorsque leur trajectoire extérieure se chevauchent, en configuration déployée d'utilisation. Sur les figures 6 et 7, les rotors (R1, R2, R3, R4, R5) sont représentés par leur trajectoire extérieure respective. Un segment (S1, S2, S3, S4, S5) est adjacent à un autre si son, respectivement un de ses, rotor(s) est adjacent au, respectivement à un des, rotor(s) dudit autre segment. Deux segments (S1, S2, S3, S4, S5) adjacents sont reliés par au moins une articulation grâce à laquelle ils peuvent pivoter l'un par rapport à l'autre avec leur(s) rotor(s) respectif(s). Ainsi, deux segments (S1, S2, S3, S4, S5) adjacents peuvent être articulés par deux axes de débattement (B2, B3, B4, B5), ou encore par un axe de débattement (B2, B3, B4, B5) et l'axe d'orientation (AP).

Afin d'être conforme à la réglementation de nombreux pays, la machine (1) peut optionnellement comporter deux panneaux de signalisation (25) visibles depuis l'arrière de la machine (1) en configuration de transport, chaque panneau de signalisation étant relié au châssis (2) par une structure de liaison (26).

Un panneau de signalisation (25) est solidarisé avec la partie extérieure (4) de chaque groupe latéral (G1, G2). De plus, ce panneau de signalisation (25) est situé au moins partiellement au-dessus de la partie extérieure (4) respective en configuration déployée. Chaque panneau de signalisation (25) étant ainsi rapproché du plan contenant les axes de rotation (AR1, AR2, AR3, AR4, AR5) du groupe latéral (G1, G2) correspondant en configuration déployée, la structure de liaison (26) est ainsi raccourcie. Le porte à faux des panneaux de signalisation (25) est ainsi réduit, et la structure de liaison (26) soumise à moins d'efforts. Cette dernière peut ainsi être allégée et/ou nécessiter moins de renforts structurels, évitant un surcoût. La longueur de la machine (1) en configuration déployée étant également diminuée, sa manoeuvrabilité est améliorée. De plus, dans cette configuration, aucun élément ne dépasse à l'arrière des rotors (R1, R2, R3, R4, R5), de sorte qu'il est possible d'approcher ces derniers par l'arrière au plus près d'un obstacle tel qu'un arbre ou une barrière. La totalité d'un champ peut ainsi être travaillé sans manoeuvre particulière. Le risque d'endommagement des panneaux de signalisation (25) et/ou de la structure de liaison (26) est aussi diminué, particulièrement lors d'une marche arrière. Enfin, l'arrière de la machine (1) est plus facilement accessible, facilitant et sécurisant une maintenance à ce niveau de la machine (1) en configuration déployée, notamment sur les rotors centraux (RC) portés par le châssis (2).

Il ressort des figures 1 à 3 notamment qu'un panneau de signalisation (25) est une plaque hachurée. Entre les hachures, les bandes sont préférentiellement rouges et blanches. En outre, chaque panneau de signalisation (25) peut comporter également un système d'éclairage, de préférence avec des feux de route et des feux clignotants.

Ainsi qu'il ressort des figures 1 et 2, les panneaux de signalisation (25) sont solidarisés à la partie extérieure (4) respective via la structure du groupe latéral (G1, G2) concerné. Dans le mode de réalisation préféré, chaque panneau de signalisation (25) est solidarisé au dernier segment (S4, S5) correspondant. Le dernier segment (S4, S5) d'un groupe latéral (G1, G2) est le plus éloigné du châssis (2) en configuration déployée. De la même manière, le dernier rotor (R4, R5) est le rotor (R1, R2, R3, R4, R5) du groupe latéral (G1, G2) considéré le plus éloigné du châssis (2) en configuration déployée. Dans le mode de réalisation préféré, le dernier rotor (R5) et le dernier segment (S5) sont les cinquièmes à partir du châssis (2) en configuration déployée. Dans le cas où le groupe latéral (G1, G2) comporte des rotors orientables (R3, R4, R5) tels que décrits ci-dessus, le dernier segment (S4, S5) est le segment (S1, S2, S3, S4, S5) situé le plus à l'arrière du groupe latéral (G1, G2) considéré en configuration de transport. De cette manière, aucun rotor (R1, R2, R3, R4, R5) n'obstrue ou ne cache, même partiellement, les panneaux de signalisation (25) dans cette configuration. Il ressort également des figures 10 qu'avec une telle fixation, chaque panneau de signalisation (25) est positionné à une hauteur autorisée par une majorité de normes en vigueur.

Ainsi qu'il ressort des figures 1 et 2, l'axe d'orientation (AP) est sensiblement vertical en configuration déployée. Dans cette configuration, les axes de rotation (AR1, AR2, AR3, AR4, AR5) sont compris dans un plan sensiblement perpendiculaire à la direction d'avance (DA) en vue de dessus. Ce plan est aussi sensiblement vertical. Les axes de débattement (B1, B2, B3, B4, B5) sont sensiblement parallèles à la direction d'avance (DA) en configuration déployée. Les pivotements autour des axes de débattement (B1, B2, B3, B4, B5) et de l'axe d'orientation (AP) sont réalisés par des actionneurs (V1, V2, V3, V4), préférentiellement de type vérins hydrauliques commandables depuis le tracteur (10). Il ressort enfin des figures 1 et 2 qu'en configuration déployée, la partie extérieure (4) est dans une position où elle est à côté de la partie intérieure (3) vu selon la direction d'avance (DA). Dans la configuration déployée, la partie extérieure (4) est située latéralement à l'extérieur de la partie intérieure (3) respective.

L'invention concerne préférentiellement une machine (1) de fenaison de type faneuse dont chaque rotor (R1, R2, R3, R4, R5), et rotor central (RC) le cas échéant, comporte des bras à l'extrémités périphériques desquels sont fixées des dents. Ces dernières permettent de ratisser et de projeter vers l'arrière de la machine (1) un produit tel que de l'herbe gisant au sol (S), en vue d'accélérer le séchage dudit produit. Dans le cas d'une faneuse, la trajectoire extérieure d'un rotor (R1, R2, R3, R4, R5) est la trajectoire formée par sa dent extérieure lors de sa rotation autour l'axe de rotation (AR1, AR2, AR3, AR4, AR5) correspondant. Chaque rotor (R1, R2, R3, R4, R5) est décalé par rapport au(x) rotor(s) (R1, R2, R3, R4, R5) adjacent(s), et au rotor central (RC) adjacent le cas échéant, selon son axe de rotation (AR1, AR2, AR3, AR4, AR5). Dans l'exemple représenté, chaque rotor compte six bras, chacun décalé de 30° par rapport au(x) rotor(s) (R1, R2, R3, R4, R5) adjacent(s), et au rotor central (RC) adjacent le cas échéant. Dans un mode de réalisation alternatif non représenté, la machine (1) pourrait être une faucheuse dont chaque rotor (R1, R2, R3, R4, R5) serait équipé de couteaux formant, lors de leur rotation, une trajectoire extérieure centrée sur l'axe de rotation (AR1, AR2, AR3, AR4, AR5) respectif.

Afin de s'assurer de retourner le produit lors de sa projection vers l'arrière et d'obtenir ainsi un séchage plus uniforme, les axes de rotation (AR1, AR2, AR3, AR4, AR5) sont de préférence légèrement inclinés vers l'avant. On comprend dans ce document par « sensiblement vertical » une direction formant un angle supérieur à 60° avec une direction horizontale. Dans le mode de réalisation préféré, chaque axe de rotation (AR1, AR2, AR3, AR4, AR5) forme un angle compris entre 5° et 25°, et plus préférentiellement entre 10° et 20°, par rapport à la verticale, en projection sur le plan médian (M). Afin d'obtenir une machine (1) compacte en configuration de transport, les axes de débattement (B1, B2, B3, B4, B5) sont sensiblement perpendiculaires aux axes de rotation (AR1, AR2, AR3, AR4, AR5), en projection sur le plan médian (M). Par « sensiblement parallèle », on comprend dans ce document que les deux droites ou directions citées forment un angle inférieur à 30°. Ainsi, les axes de débattement (B1, B2, B3, B4, B5) forment, dans le mode de réalisation préféré, un angle avec la direction d'avance (DA) inférieur à 30°, et plus préférentiellement inférieur à 20° en configuration déployée.

La machine (1) comporte un dispositif d'attelage (7) situé à l'avant. Ce dernier est destiné être connecté à un véhicule tracteur (10). Il est de préférence de type trois points. En configuration transport, la machine (1) n'est pas en contact avec le sol (S). Ce type de machine (1), portée par le tracteur (10) en configuration transport, est plus facilement manoeuvrable.

Une droite dite d'attelage (8) passant par les deux tourillons inférieurs du dispositif d'attelage (7) est orientée horizontalement. Le plan dit médian (M) est orthogonal à la droite d'attelage (8) et parallèle à la direction d'avance (DA). Ce plan médian (M) est en outre situé à égale distance des tourillons inférieurs du dispositif d'attelage (7). A moins d'une mention contraire, toute orientation indiquée dans ce document est à considérer pour une machine (1) en configuration déployée, attelée à un véhicule tracteur (10), le tracteur (10) et la machine (1) étant disposés sur un support, respectivement un sol (S), horizontal et plan. La direction d'avance (DA) est orientée sensiblement horizontalement.

La transposition de la machine (1) depuis sa configuration déployée d'utilisation vers sa configuration de transport est cette même transposition pour les deux groupes latéraux (G1, G2). De préférence, lors des transpositions, un groupe latéral (G1) est transposé avec un léger décalage temporel par rapport à l'autre groupe latéral (G2) afin d'éviter qu'ils ne se percutent mutuellement. Les segments (S1, S2, S3, S4, S5) des deux groupes latéraux (G1, G2) sont sensiblement symétriques par rapport au plan médian (M), au moins dans les configurations déployées et de transport de la machine (1). Lors de l'utilisation de la machine (1), au moins un groupe latéral (G1, G2) est en configuration déployée. Lorsque les deux groupes latéraux (G1, G2) sont en configuration déployée, la machine (1) est en configuration déployée. Lorsque les deux groupes latéraux (G1, G2) sont en configuration de transport, la machine (1) est en configuration de transport. Il en va de même pour toutes les configurations.

Selon une autre caractéristique avantageuse de l'invention, la partie extérieure (4) de chaque groupe latéral (G1, G2) est plus longue que sa partie intérieure (3). De cette manière, on s'assure de ne pas dépasser une hauteur déterminée en configuration de transport. Grâce au pivotement des rotors orientables (R3, R4, R5) autour de l'axe de pivotement (AP), lors de la transposition d'un groupe latéral (G1, G2) depuis sa configuration déployée d'utilisation vers sa configuration de transport, les parties extérieures (4) ne se percutent pas mutuellement, et ne percutent pas le châssis (2). De plus, il ressort des figures 10, qu'avec des parties extérieures (4) plus longues que les parties intérieures (3), des structures de liaison (26) des panneaux de signalisation (25) qui seraient reliées au châssis (2) seraient également particulièrement longues, et présenteraient une forme complexe à réaliser.

Ainsi qu'il ressort de la figure 1 notamment, chaque groupe latéral (G1, G2) peut comporter une protection latérale (9) s'étendant plus loin du châssis (2) que le dernier rotor (R4, R5) à partir du châssis (2). Dans le cas d'un groupe latéral (G1, G2) comportant quatre rotors (R1, R2, R3, R4), la partie extérieure (4) est donc plus longue que la partie intérieure (3) du fait de la protection latérale (9).

Du fait que chaque panneau de signalisation (25) et sa structure de liaison (26) sont pivotés avec le groupe latéral (G1, G2) respectif, respectivement avec la partie extérieure (4) de laquelle il est solidaire, il n'est pas nécessaire que le panneau de signalisation (25) et sa structure de liaison (26) soient situés en dehors des trajectoires de déplacement des groupes latéraux (G1, G2) lors de leurs transpositions entre les configurations déployée et de transport. Selon une caractéristique intéressante, chaque panneau de signalisation (25) est situé, en configuration déployée, plus proche du châssis (2) que la protection latérale (9) correspondante. De cette manière, en configuration déployée, la largeur de la machine (1) n'est pas augmentée. De plus, en configuration de transport, chaque panneau de signalisation (25) est situé plus proche du châssis (2) que l'extrémité arrière de la machine (1). La machine (1) occupe ainsi une surface au sol (S) moindre en configuration de transport. Préférentiellement, chaque panneau de signalisation (25) est situé, en configuration déployée, plus proche du châssis (2) que de la trajectoire extérieure du rotor (R4, R5) du segment (S4, S5) auquel il est solidarisé, de sorte qu'en configuration de transport, la machine (1) est moins longue, améliorant ainsi sa manoeuvrabilité. Ainsi qu'autorisé par une majorité de normes, chaque panneau de signalisation (25) est situé à moins d'un mètre devant l'extrémité arrière de la machine (1).

Lors des transpositions d'un groupe latéral (G1, G2) entre configuration déployée et configuration de transport, ses rotors orientables (R3, R4, R5) sont pivotés autour de l'axe d'orientation (AP) selon un angle d'orientation (27), et, en configuration déployée, le panneau de signalisation (25) forme par rapport au plan passant par les axes de rotation (AR1, AR2, AR3, AR4, AR5), en vue selon un des axes de rotation (AR1, AR2, AR3, AR4, AR5), un angle d'une valeur sensiblement égale à la valeur de l'angle d'orientation (27). Par conséquent, le panneau de signalisation (25) est orienté au moins sensiblement parallèlement à la droite d'attelage (8) en configuration de transport, et est donc particulièrement visible depuis l'arrière de la machine (1).

Selon une autre caractéristique intéressante, les rotors orientables (R3, R4, R5) peuvent pivoter autour de l'axe d'orientation (AP) selon un angle d'environ 45° par rapport au châssis (2). Lorsque chaque groupe latéral (G1, G2) comprend cinq rotors (R1, R2, R3, R4, R5), cette caractéristique offre un bon compromis entre la longueur de la machine (1) selon la direction d'avance (DA) et sa hauteur en configuration de transport, tout en augmentant significativement sa largeur de travail en configuration déployée.

L'orientation du panneau de signalisation (25) en configuration de transport et en vue latérale est dépendante du tracteur (10). En effet, pour éviter toute interaction de la machine (1) avec le sol (S), la machine (1) est pivotée vers le haut par rapport au tracteur (10), lui permettant de se déplacer plus rapidement sans devoir équiper la machine (1) en conséquence. Ainsi qu'il ressort de la figure 1, le panneau de signalisation (25) forme un angle compris entre 5° et 45° par rapport à la direction d'avance (DA) et en vue latérale. De cette manière, le panneau de signalisation (25) est orienté sensiblement perpendiculairement à la direction d'avance (DA) en configuration de transport, améliorant sa visibilité depuis l'arrière de la machine (1) en configuration de transport.

Selon une autre caractéristique intéressante, chaque groupe latéral (G1, G2) peut pivoter autour du premier axe de débattement (B1) respectif dans le même sens de pivotement que sa partie extérieure (4) par rapport à la partie intérieure (3) respective. De préférence, pour les transpositions entre configuration déployée d'utilisation et configuration de transport, chaque groupe latéral (G1, G2) est pivoté d'environ 90° autour de l'axe de débattement (B1) respectif. Ce pivotement permet d'atteindre la position de transport du groupe latéral (G1, G2) respectif. C'est grâce à ce pivotement des groupes latéraux (G1, G2) que les axes de rotation (AR1, AR2, AR3, AR4, AR5) sont orientés sensiblement horizontalement en configuration de transport. Dans cette configuration, les axes de rotation (AR1, AR2, AR3, AR4, AR5) sont également orientés perpendiculairement à la direction d'avance (DA). Ainsi qu'il ressort de la figure 10B, en configuration de transport des groupes latéraux (G1, G2), les parties extérieures (4) sont positionnées au moins partiellement entre les parties intérieures (3) vues selon la direction d'avance (DA). Cette particularité permet de réduire la largeur de la machine (1) ainsi que de déplacer son centre de gravité vers l'avant, assurant une meilleure stabilité de la machine (1) en configuration de transport. Aussi, il ressort de la figure 10C, qu'en configuration de transport d'un groupe latéral (G1, G2), le plan passant par les premier (AR1) et deuxième (AR2) axes de rotation forme un angle d'environ 45° vers le bas et l'arrière avec le plan passant par les troisième (AR3) et quatrième (AR4) axes de rotation. Dans cette configuration, la partie extérieure (4) prend appui sur le châssis (2), permettant avantageusement de soulager la structure du groupe latéral respectif. De préférence, chaque groupe latéral (G1, G2) est pivotée d'environ 90° autour de l'axe de débattement (B1) respectif une fois que le pivotement de sa partie extérieure (4) par rapport à la partie intérieure (3) respective est achevé.

En accord avec le mode de réalisation préféré ressortant des figures 1 à 3, 6 et 8 à 10, l'axe d'orientation (AP) est situé entre le troisième axe de rotation (AR3) et le quatrième axe de rotation (AR4) à partir du châssis (2) en configuration déployée. Avec une telle disposition de l'axe d'orientation (AP), les rotors orientables (R4, R5) sont moins nombreux (figures 6), limitant l'effort à fournir pour leur pivotement. En effet, les rotors orientables (R4, R5) sont alors les deux derniers rotors (R4, R5) du groupe latéral (G1, G2) considéré. Dans ce mode de réalisation le centre de gravité de chaque groupe latéral (G1, G2) est abaissé davantage, rendant la machine (1) plus stable en configuration de transport.

La partie extérieure (4) peut être pivotée autour du deuxième (B2) ou du troisième (B3) axe de débattement d'un angle supérieur à 150°. Dans le mode de réalisation préféré des figures 6, la partie extérieure (4) est pivotée autour du troisième axe de débattement (B3) d'un angle d'environ 160°. Une fois ce pivotement terminé (figures 6B, 7B et 9), la partie extérieure (4) occupe la position dans laquelle elle est au-dessus de la partie intérieure (3) respective vu selon la direction d'avance (DA). Il ressort des figures 6 et 7 que chaque partie extérieure (4) comporte les troisième rotor (R3) et quatrième rotor (R4), et, le cas échéant, le cinquième rotor (R5) du groupe latéral (G1, G2) respectif à partir du châssis (2).

Dans le mode de réalisation préféré, l'axe d'orientation (AP) n'est ni confondu ni concourant avec les axes de rotation (AR1, AR2, AR3, AR4, AR5). La hauteur de la machine (1) en configuration de transport peut ainsi être réduite. Plus précisément encore, l'axe d'orientation (AP) est situé entre le troisième axe de rotation (AR3) et le quatrième axe de débattement (B4). Préférentiellement, l'axe d'orientation (AP) n'est concourant avec aucun axe de débattement (B1, B2, B3, B4, B5). Une telle réalisation laisse, par rapport à une réalisation dans laquelle l'axe d'orientation (AP) et l'un des axes de débattement (B2, B3, B4) sont concourants, plus de place pour l'implantation des actionneurs (V1, V2, V3, V4). De plus, ces actionneurs sont ainsi soumis à moins de variation d'angle permettant l'utilisation d'articulation rotulante standard pour leur fixation à la structure.

Comme le montrent les figures 6 et 7, le pivotement des rotors orientables (R3, R4, R5) autour de l'axe d'orientation (AP) peut se faire vers l'avant ou vers l'arrière. Selon une première variante de réalisation représenté sur les figures 7, les rotors orientables (R3, R4, R5) peuvent pivoter par rapport au châssis (2) vers l'avant autour de l'axe d'orientation (AP) qui est situé entre les deuxième (AR2) et troisième (AR3) axes de rotation. Dans cette variante, la partie extérieure (4) comporte tous les rotors orientables (R3, R4, R5). Selon cette première variante la course de l'actionneur d'orientation (V3) permettant le pivotement autour de l'axe d'orientation (AP) doit être plus importante afin que la machine (1) puisse occuper une configuration de fanage en bordure. En effet, pour atteindre cette configuration, les rotors orientables (R3, R4, R5) doivent être pivotés autour de l'axe d'orientation (AP) dans le sens opposé à celui pour la transposition depuis la configuration déployée vers la configuration de transport.

Selon une caractéristique avantageuse, au moins un groupe latéral (G1, G2) peut également occuper une configuration de fanage en bordure dans laquelle les rotors orientables (R3, R4, R5) sont pivotés vers l'arrière autour de l'axe d'orientation (AP) d'environ 20° en partant de la configuration déployée du groupe latéral (G1, G2) considéré. La configuration de fanage en bordure permet d'éviter des projections de produit à l'extérieur d'une bordure (11) lorsque le groupe latéral (G1, G2) se déplace le long de ladite bordure (11). La bordure (11) est par exemple la limite du champ.

Grâce à la verticalité de l'axe d'orientation (AP), les appuis (5) des rotors orientables (R3, R4, R5) restent en contact avec le sol (S) même après avoir été pivotés de 20° autour de l'axe d'orientation (AP). Plus l'axe d'orientation (AP) est proche de la verticale, mieux seront conservés les inclinaisons des axes de débattement (B1, B2, B3, B4, B5) et des axes de rotation (AR1, AR2, AR3, AR4, AR5) dans la configuration de fanage en bordure. Dans le mode de réalisation préféré, l'axe d'orientation (AP) forme ainsi avec l'horizontale un angle supérieur à 75°, et de préférence supérieur à 80°. Dans cette configuration, les secteurs angulaires de débattement des rotors orientables (R3, R4, R5) autour des axes de débattement (B3, B4, B5) correspondants sont ainsi sensiblement égaux à ceux de la configuration déployée, de sorte qu'en configuration de fanage en bordure, ni la qualité de râtelage, ni le tapis végétal ne sont détériorés.

Ainsi qu'il est visible sur la figure 2, chaque appui (5) peut être réalisé par une roulette ou une roue folle. Les axes de roulement de ces roulettes sont sensiblement horizontaux et perpendiculaires à la direction d'avance (DA) dans la configuration déployée. Afin que les axes de roulettes restent perpendiculaires à la direction d'avance (DA) en configuration de fanage en bordure, les roulettes peuvent être montées pivotantes par rapport à leur segment (S1, S2, S3, S4, S5) respectif selon un axe sensiblement vertical. L'appui (5) est de préférence en contact avec le sol (S) dans la configuration déployée. Chaque appui (5) pourrait également être réalisé par un patin glissant sur le sol (S). Chaque appui (5) peut aussi être légèrement excentré par rapport à l'axe de rotation (AR1, AR2, AR3, AR4, AR5) correspondant.

Selon une deuxième variante de réalisation non représentée, chaque groupe latéral (G1, G2) comporte un premier segment (S1) à partir du châssis (2) qui porte les premier (R1) et deuxième rotors (R2), et un second segment (S2) qui porte les troisième (R3) et quatrième rotor (R4). Dans cette variante, le premier segment (S1) est relié au deuxième segment (S2) par le deuxième axe de débattement (B2) et le troisième axe de débattement (B3). Dans cette variante, les rotors d'un groupe latéral sont articulés entre eux uniquement autour des deuxième et troisième axes de débattement (B2, B3). Un inconvénient d'une telle réalisation dans laquelle deux rotors (R1, R2, R3, R4, R5) adjacents ne sont pas articulés selon un axe parallèle à la direction d'avance (DA) est une moins bonne adaptation des segments aux irrégularités du sol (S), ce qui dégrade la qualité de râtelage et/ou provoque la dégradation du tapis végétal.

Conformément avec un mode de réalisation préféré de l'invention, chaque rotor (R1, R2, R3, R4, R5) est porté par un segment (S1, S2, S3, S4, S5) qui lui est propre. Chaque rotor (R1, R2, R3, R4, R5) est alors articulé avec le ou les rotor(s) (R1, R2, R3, R4, R5) adjacent(s) par un axe de débattement (B2, B3, B4, B5) correspondant. Dans la configuration déployée, les pivotements autour des axes de débattement (B1, B2, B3, B4, B5) sont libres, permettant une bonne adaptation des segments (S1, S2, S3, S4, S5) au sol (S). Chaque rotor (AR1, AR2, AR3, AR4, AR5) peut ainsi pivoter par rapport à son ou ses rotor(s) (AR1, AR2, AR3, AR4, AR5) adjacent(s) autour de l'axe de débattement (B1, B2, B3, B4, B5) correspondant selon un certain angle de débattement. Chaque groupe latéral (G1, G2) épousant ainsi mieux les irrégularités du sol (S), on obtient une meilleure qualité de râtelage tout en ménageant le tapis végétal. Dans la configuration de transport, au moins certains des pivotements autour des axes de débattement (B1, B2, B3, B4, B5) sont bloqués, et préférentiellement tous, afin d'éviter tout risque de casse ou de blessure.

Comme le montrent les figures 4 et 5 à titre d'exemple, les segments (S1, S2, S3, S4, S5) de chaque groupe latéral (G1, G2) sont pourvus de portions d'arbres (PA, PB, PC) de transmission de mouvement pour les rotors (R1, R2, R3, R4, R5), guidées en rotation par des paliers (6) et formant ensemble par coopération une ligne de transmission de mouvement pour le groupe latéral (G1, G2) considéré.

La liaison cinématique entre les différentes portions d'arbres (PA, PB, PC) au niveau des axes de débattement (B1, B2, B3, B4, B5) peut être réalisée par exemple par un cardan double (non représenté). Telles que représentées sur la figure 5, ces liaisons sont préférentiellement réalisées par des moyens complémentaires (C1, C2) d'une transmission à doigts. Les moyens complémentaires (C1, C2) sont mutuellement engrenant en configuration déployée. En prévoyant une distance déterminée entre l'axe de débattement (B1, B2, B3, B4, B5) ou l'axe d'articulation (AP) et l'axe de la ligne de transmission, les moyens complémentaires (C1, C2) engrènent également lorsque les portions d'arbre (PA, PB, PC) sont pivotées autour dudit axe, comme représenté sur la figure 5. De cette manière, les rotors (R1, R2, R3, R4, R5) conservent leur orientation autour de leur axe de rotation respectif dans toutes les configurations, permettant un contrôle ininterrompu de leur position, en particulier un blocage en position en cas de non-entrainement.

En accord avec une autre caractéristique intéressante, l'axe d'orientation (AP) n'est pas concourant avec l'axe des portions d'arbre (PA, PB, PC) en configuration déployée. Les moyens complémentaires (C1, C2) d'une transmission à doigts autorisent avantageusement un coulissement d'au moins une des deux portions d'arbre (PA, PB, PC) par rapport à l'autre sans qu'ils ne soient découplés. La mise en oeuvre d'un cardan double nécessiterait, elle, un coulissement d'au moins une des deux portions d'arbres (PA, PB, PC) par rapport à l'autre pour autoriser le pivotement autour de l'axe (AP). Les portions d'arbres (PA, PB, PC) n'ont ainsi pas besoin d'être télescopiques, évitant de fréquentes opérations de graissage ainsi qu'un surcout. De plus, les portions d'arbres de transmissions télescopiques ne permettent d'ordinaire pas de longues courses de déplacement, particulièrement avec une portion d'arbre de transmission (PB) aussi courte que celle s'étendant entre l'axe d'orientation (AP) et le quatrième axe de débattement (B4).

Le pivot (12) de l'axe d'orientation (AP) est réalisé traversant le segment (S1, S2, S3, S4, S5) concerné, à savoir le troisième segment (S3) dans le mode de réalisation préféré. Il est ainsi guidé en rotation sur la majorité de sa hauteur, et de préférence sur toute sa hauteur, ce qui entraine une meilleure résistance aux efforts et une durée de vie allongée.

Sur les figures 1 à 3, chaque panneau de signalisation (25) est relié au groupe latéral (G1, G2) correspondant par une structure de liaison (26) respective. La structure de liaison (26) est réalisée par un tube, de préférence de section circulaire. Tel que représentée, la structure de liaison (26) comporte trois portions rectilignes (30, 31, 32). Une première portion (30) est orientée sensiblement horizontalement en configuration déployée. Cette première portion (30) est de préférence parallèle au dernier segment (S4, S5) auquel le panneau de signalisation (25), respectivement sa structure de liaison (26), est solidarisé(e). La structure de liaison (26) comporte aussi une deuxième portion (31) orientée sensiblement verticalement en configuration déployée, au moins selon une vue latérale. Cette deuxième portion (31) peut présenter une légère inclinaison par rapport à la verticale, en configuration déployée, vu selon la direction d'avance (DA). Enfin, la structure de liaison (26) présente une troisième portion (32) orientée, en configuration déployée, transversalement à la direction d'avance (DA), et de préférence sensiblement horizontalement. Ainsi qu'il ressort de la figure 1, la troisième portion (32) forme préférentiellement un angle d'environ 45° avec la direction d'avance (DA), en vue de dessus et en configuration déployée. Le panneau de signalisation (25) est solidarisé avec la structure de liaison (26) respective de manière immuable. Il ressort de la figure 11 notamment, que le panneau de signalisation (25) est solidaire des deuxième portion (31) et troisième portion (32). La structure de liaison (26) est solidarisée avec le dernier segment (S4, S5) via la première portion (30).

Ainsi qu'il ressort des figures 3 et 11, chaque panneau de signalisation (25) est optionnellement déplaçable par rapport au segment (S1, S2, S3, S4, S5) auquel il est solidarisé. Dans le mode de réalisation préféré, chaque panneau de signalisation (25) est pivotable par rapport au dernier segment (S4, S5) correspondant selon un axe dit d'effacement (29) orienté transversalement à la direction d'avance (DA) en configuration déployée d'utilisation, permettant avantageusement d'escamoter le panneau de signalisation (25) en cas de contact avec un obstacle lors de l'avance de la machine (1). Plus préférentiellement, l'axe d'effacement (29) est sensiblement parallèle au dernier segment (S4, S5) auquel le panneau de signalisation (25) est solidarisé, simplifiant avantageusement sa structure de liaison (26). Dans la configuration déployée d'utilisation, l'axe d'effacement (29) est ainsi sensiblement horizontal, de sorte que la hauteur d'un groupe latéral (G1, G2) peut être réduite, sans pour autant augmenter celui-ci en largeur. De préférence, chaque panneau de signalisation (25) peut pivoter autour de l'axe d'effacement (29) selon un angle d'au moins 30°, et plus préférentiellement d'au moins 40°. Ainsi qu'il ressort de la figure 11, en position escamoté du panneau de signalisation (25), le groupe latéral (G1, G2) respectif présente une hauteur réduite.

Ainsi qu'il ressort des figures 1 et 2, la totalité de chaque panneau de signalisation (25) et de sa structure de liaison (26) est située au-dessus de la partie extérieure (4) correspondante en configuration déployée. Plus précisément, la totalité de chaque panneau de signalisation (25) et de sa structure de liaison (26) est située à l'intérieure de la trajectoire extérieure du rotor (R1, R2, R3, R4, R5) du segment (S1, S2, S3, S4, S5) auquel le panneau de signalisation (25) est solidarisé, en projection selon l'axe de rotation dudit rotor (R1, R2, R3, R4, R5), réduisant la longueur de la structure de liaison (26).

L'invention concerne également un procédé de transposition d'un groupe latéral (G1, G2) d'une machine agricole (1) telle que décrite ci-dessus

Plus précisément, l'invention vise un procédé de transposition d'un groupe latéral (G1, G2) d'une machine agricole (1) se déplaçant selon une direction d'avance (DA) en utilisation et comprenant un châssis (2) et deux groupes latéraux (G1, G2), chaque groupe latéral (G1, G2) étant articulé de part et d'autre du châssis (2) de manière à pouvoir pivoter autour d'un premier axe de débattement (B1) respectif sensiblement parallèle à la direction d'avance (DA) et comprenant au moins quatre rotors (R1, R2, R3, R4, R5), chaque rotor (R1, R2, R3, R4, R5) étant animé en rotation autour d'un axe de rotation (AR1, AR2, AR3, AR4, AR5) et supporté par un appui (5), les rotors (R1, R2, R3, R4, R5) de chaque groupe latéral (G1, G2) étant articulés entre eux autour d'au moins un deuxième axe de débattement (B2) et d'un troisième axe de débattement (B3) sensiblement parallèles à la direction d'avance (DA) et autour d'un axe d'orientation (AP) sensiblement vertical et situé entre le deuxième axe de rotation (AR2) et le quatrième axe de rotation (AR4) à partir du châssis (2).

Ce procédé permet de transposer le groupe latéral (G1, G2) considéré depuis une configuration déployée d'utilisation dans laquelle les axes de rotation (AR1, AR2, AR3, AR4, AR5) de ses rotors (R1, R2, R3, R4, R5) sont compris dans un même plan vers une configuration de transport dans laquelle ces axes de rotation (AR1, AR2, AR3, AR4, AR5) sont sensiblement horizontaux.

Ce procédé est caractérisé en ce qu'il consiste à :
- i) pivoter les rotors orientables (R3, R4, R5) autour de leur axe d'orientation (AP) respectif selon un angle compris entre 20° et 60°,
- ii) pivoter une partie extérieure (4) comportant les troisième rotor (R3) et quatrième rotor (R4) au-dessus, vu selon la direction d'avance (DA), d'une partie intérieure (3) comportant les premier rotor (R1) et deuxième rotor (R2),
- iii) pivoter autour du premier axe de débattement (B1) correspondant tous les rotors (R1, R2, R3, R4, R5) dans le même sens de pivotement que la partie extérieure (4) respective jusqu'à ce que leurs axes de rotation (AR1, AR2, AR3, AR4, AR5) soient orientés sensiblement horizontalement et perpendiculairement à la direction d'avance (DA).

Selon une première variante, les étapes ci-dessus sont réalisées de manière chronologique, c'est-à-dire successivement dans leur ordre d'énonciation.

Selon une seconde variante, les étapes i) et ii) se chevauchent au moins partiellement dans le temps, voire sont effectuées simultanément. Dans ce dernier cas toutefois, le pivotement à 20° pour faner en bordure n'est possible qu'avec une commande supplémentaire lors de la transposition de la configuration déployée à la configuration de transport.

La transposition de la configuration de transport à la configuration déployée s'effectue en réalisant les étapes inverses et dans l'ordre inverse.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications indépendantes 1 et 9.

## Revendications

1. (Machine agricole (1) se déplaçant selon une direction d'avance (DA) en utilisation et comprenant un châssis (2) et deux groupes latéraux (G1, G2), chaque groupe latéral (G1, G2) étant articulé de part et d'autre du châssis (2) de manière à pouvoir pivoter autour d'un premier axe de débattement (B1) sensiblement parallèle à la direction d'avance (DA) et comprenant plusieurs rotors (R1, R2, R3, R4, R5), chaque rotor (R1, R2, R3, R4, R5) étant animé en rotation autour d'un axe de rotation (AR1, AR2, AR3, AR4, AR5) et supporté par un appui (5), les rotors (R1, R2, R3, R4, R5) de chaque groupe latéral (G1, G2) étant articulés entre eux autour d'au moins un deuxième axe de débattement (B2) et d'un troisième axe de débattement (B3) sensiblement parallèles à la direction d'avance (DA) et autour d'un axe d'orientation (AP) sensiblement vertical, chaque groupe latéral (G1, G2) pouvant adopter une configuration déployée d'utilisation dans laquelle les axes de rotation (AR1, AR2, AR3, AR4, AR5) de ses rotors (R1, R2, R3, R4, R5) sont compris dans un même plan et une configuration de transport dans laquelle ces axes de rotation (AR1, AR2, AR3, AR4, AR5) sont sensiblement horizontaux, chaque groupe latéral (G1, G2) comprenant au moins quatre rotors (R1, R2, R3, R4, R5), l'axe d'orientation (AP) étant situé entre le deuxième axe de rotation (AR2) et le quatrième axe de rotation (AR4) à partir du châssis (2), des rotors dits orientables (R3, R4, R5) pouvant pivoter par rapport au châssis (2) autour de l'axe d'orientation (AP) selon un angle compris entre 20° et 60°, et en ce que chaque groupe latéral (G1, G2) comprend une partie intérieure (3) comportant les premier rotor (R1) et deuxième rotor (R2) à partir du châssis (2) et une partie extérieure (4) comportant au moins les deux derniers rotors (R3, R4, R5) à partir du châssis (2),
machine (1) **caractérisée en ce que** la partie extérieure (4) peut pivoter entre une position à côté et une position au-dessus de la partie intérieure (3) en vue selon la direction d'avance (DA).

2. Machine agricole (1) selon la revendication 1, **caractérisée en ce que** la partie extérieure (4) de chaque groupe latéral (G1, G2) est plus longue que sa partie intérieure (3).

3. Machine agricole (1) selon la revendication 1 ou 2, **caractérisée en ce que** chaque groupe latéral (G1, G2) comporte cinq rotors (R1, R2, R3, R4, R5), et **en ce que** les rotors orientables (R3, R4, R5) peuvent pivoter autour de l'axe d'orientation (AP) selon un angle d'environ 45° par rapport au châssis (2).

4. Machine agricole (1) selon l'une des revendications 1 à 3, **caractérisée en ce que** chaque groupe latéral (G1, G2) peut pivoter autour du premier axe de débattement (B1) respectif dans le même sens de pivotement que sa partie extérieure (4) par rapport à la partie intérieure (3) respective.

5. Machine agricole (1) selon l'une des revendications 1 à 4, **caractérisée en ce que** l'axe d'orientation (AP) est situé entre le troisième axe de rotation (AR3) et le quatrième axe de rotation (AR4) à partir du châssis (2) en configuration déployée.

6. Machine agricole (1) selon l'une des revendications 1 à 5, **caractérisée en ce que** chaque rotor (R1, R2, R3, R4, R5) est articulé avec le ou les rotor(s) (R1, R2, R3, R4, R5) adjacent(s) par un axe de débattement (B2, B3, B4, B5).

7. Machine agricole (1) selon l'une quelconque des revendications 1 à 6, **caractérisée en ce que** l'axe d'orientation (AP) n'est ni confondu ni concourant avec les axes de rotation (AR1, AR2, AR3, AR4, AR5) en configuration déployée.

8. Machine agricole (1) selon l'une quelconque des revendications 1 à 7, **caractérisée en ce qu'**au moins un groupe latéral (G1, G2) peut occuper une configuration de travail en bordure dans laquelle les rotors orientables (R3, R4, R5) sont pivotés vers l'arrière autour de l'axe d'orientation (AP) d'environ 20° en partant de la configuration déployée du groupe latéral (G1, G2) considéré.

9. Procédé de transposition d'un groupe latéral (G1, G2) d'une machine agricole (1) se déplaçant selon une direction d'avance (DA) en utilisation et comprenant un châssis (2) et deux groupes latéraux (G1, G2), chaque groupe latéral (G1, G2) étant articulé de part et d'autre du châssis (2) de manière à pouvoir pivoter autour d'un premier axe de débattement (B1) respectif sensiblement parallèle à la direction d'avance (DA) et comprenant au moins quatre rotors (R1, R2, R3, R4, R5), chaque rotor (R1, R2, R3, R4, R5) étant animé en rotation autour d'un axe de rotation (AR1, AR2, AR3, AR4, AR5) et supporté par un appui (5), les rotors (R1, R2, R3, R4, R5) de chaque groupe latéral (G1, G2) étant articulés entre eux autour d'au moins un deuxième axe de débattement (B2) et d'un troisième axe de débattement (B3) sensiblement parallèles à la direction d'avance (DA) et autour d'un axe d'orientation (AP) sensiblement vertical et situé entre le deuxième axe de rotation (AR2) et le quatrième axe de rotation (AR4) à partir du châssis (2),
ledit procédé permettant de transposer le groupe latéral (G1, G2) considéré depuis une configuration déployée d'utilisation dans laquelle les axes de rotation (AR1, AR2, AR3, AR4, AR5) de ses rotors (R1, R2, R3, R4, R5) sont compris dans un même plan vers une configuration de transport dans laquelle ces axes de rotation (AR1, AR2, AR3, AR4, AR5) sont sensiblement horizontaux, le procédé comportant une étape consistant à pivoter autour du premier axe de débattement (B1) correspondant tous les rotors (R1, R2, R3, R4, R5) dans le même sens de pivotement que la partie extérieure (4) respective jusqu'à ce que leurs axes de rotation (AR1, AR2, AR3, AR4, AR5) soient orientés sensiblement horizontalement et perpendiculairement à la direction d'avance (DA), procédé **caractérisé en ce qu'**il consiste à :
- i) pivoter des rotors dits orientables (R3, R4, R5) par rapport au châssis (2) autour de l'axe d'orientation (AP) selon un angle compris entre 20° et 60°,
- ii) pivoter une partie extérieure (4) du groupe latéral (G1, G2) considéré, comportant les troisième rotor (R3) et quatrième rotor (R4), au-dessus, vu selon la direction d'avance (DA), d'une partie intérieure (3) de ce groupe latéral, comportant les premier rotor (R1) et deuxième rotor (R2).

10. Procédé selon la revendication 9, **caractérisé en ce que** les étapes i) et ii) se chevauchent au moins partiellement dans le temps, voire sont effectuées simultanément.

## Patentansprüche

1. Landwirtschaftliche Maschine (1), die sich beim Betrieb in einer Vorschubrichtung (DA) bewegt und einen Rahmen (2) und zwei Seitengruppen (G1, G2) umfasst, wobei jede Seitengruppe (G1, G2) auf eine Seite des Rahmens (2) gelenkig verbunden ist, so dass sie um eine im Wesentlichen zu der Vorschubrichtung (DA) parallelen erste Ausschlagachse (B1) schwenken kann, und mehrere Rotoren (R1, R2, R3, R4, R5) umfasst, wobei jeder Rotor (R1, R2, R3, R4, R5) um eine Drehachse (AR1, AR2, AR3, AR4, AR5) angetrieben ist und von einer Auflage (5) getragen ist, wobei die Rotoren (R1, R2, R3, R4, R5) jeder Seitengruppe (G1, G2) um mindestens eine zweite Ausschlagachse (B2) und eine dritte Ausschlagachse (B3), die im Wesentlichen parallel zu der Vorschubrichtung (DA) sind, und um eine im Wesentlichen vertikale Ausrichtungsachse (AP) gelenkig miteinander verbunden sind, wobei jede Seitengruppe (G1, G2) eine ausgeklappte Betriebskonfiguration, in der die Drehachsen (AR1, AR2, AR3, AR4, AR5) ihrer Rotoren (R1, R2, R3, R4, R5) in einer gemeinsamen Ebene liegen, und eine Transportkonfiguration, in der diese Drehachsen (AR1, AR2, AR3, AR4, AR5) im Wesentlichen horizontal sind, annehmen kann, wobei jede Seitengruppe (G1, G2) mindestens vier Rotoren (R1, R2, R3, R4, R5) umfasst, wobei sich die Ausrichtungsachse (AP) ausgehend von dem Rahmen (2) zwischen der zweiten Drehachse (AR2) und der vierten Drehachse (AR4) befindet, wobei sogenannte orientierbare Rotoren (R3, R4, R5) in Bezug auf den Rahmen (2) um die Ausrichtungsachse (AP) in einem Winkel zwischen 20° und 60° schwenken können und wobei jede Seitengruppe (G1, G2) aus einem Innenteil (3), das den ersten Rotor (R1) und den zweiten Rotor (R2) ausgehend von dem Rahmen (2) umfasst, und einem Außenteil (4), das mindestens die zwei letzten Rotoren (R3, R4, R5) ausgehend von dem Rahmen (2) umfasst, besteht,
Maschine (1) **dadurch gekennzeichnet, dass** das Außenteil (4) zwischen einer Position neben und einer Position über dem Innenteil (3), gesehen in der Vorschubrichtung (DA), schwenken kann.

2. Landwirtschaftliche Maschine (1) nach Anspruch 1, **dadurch gekennzeichnet, dass** das Außenteil (4) jeder Seitengruppe (G1, G2) länger ist als ihr Innenteil (3).

3. Landwirtschaftliche Maschine (1) nach Anspruch 1 oder 2, **dadurch gekennzeichnet, dass** jede Seitengruppe (G1, G2) fünf Rotoren (R1, R2, R3, R4, R5) umfasst und dass die orientierbaren Rotoren (R3, R4, R5) in einem Winkel von etwa 45° zum Rahmen (2) um die Ausrichtungsachse (AP) schwenken können.

4. Landwirtschaftliche Maschine (1) nach einem der Ansprüche 1 bis 3, **dadurch gekennzeichnet, dass** jede Seitengruppe (G1, G2) um die jeweilige erste Ausschlagachse (B1) in der gleichen Schwenkrichtung wie ihr Außenteil (4) in Bezug auf das jeweilige Innenteil (3) schwenken kann.

5. Landwirtschaftliche Maschine (1) nach einem der Ansprüche 1 bis 4, **dadurch gekennzeichnet, dass** sich die Ausrichtungsachse (AP) zwischen der dritten Drehachse (AR3) und der vierten Drehachse (AR4), ausgehend von dem Rahmen (2) in der ausgeklappten Konfiguration, befindet.

6. Landwirtschaftliche Maschine (1) nach einem der Ansprüche 1 bis 5, **dadurch gekennzeichnet, dass** jeder Rotor (R1, R2, R3, R4, R5) über eine Ausschlagachse (B2, B3, B4, B5) mit dem oder den benachbarten Rotor(en) (R1, R2, R3, R4, R5) angelenkt ist.

7. Landwirtschaftliche Maschine (1) nach irgend einem der Ansprüche 1 bis 6, **dadurch gekennzeichnet, dass** die Ausrichtungsachse (AP) in der ausgeklappten Konfiguration weder mit den Drehachsen (AR1, AR2, AR3, AR4, AR5) zusammenfällt noch damit übereinstimmt.

8. Landwirtschaftliche Maschine (1) nach irgend einem der Ansprüche 1 bis 7, **dadurch gekennzeichnet, dass** mindestens eine Seitengruppe (G1, G2) eine Randarbeitskonfiguration einnehmen kann, bei der die orientierbaren Rotoren (R3, R4, R5), ausgehend von der ausgeklappten Konfiguration der jeweiligen Seitengruppe (G1, G2), um etwa 20° nach hinten um die Ausrichtungsachse (AP) geschwenkt werden.

9. Umsetzungsverfahren einer Seitengruppe (G1, G2) einer landwirtschaftlichen Maschine (1), die sich beim Betrieb in einer Vorschubrichtung (DA) bewegt und einen Rahmen (2) und zwei Seitengruppen (G1, G2) umfasst, wobei jede Seitengruppe (G1, G2) auf eine Seite des Rahmens (2) gelenkig verbunden ist, so dass sie um eine jeweilige im Wesentlichen zu der Vorschubrichtung (DA) parallelen erste Ausschlagachse (B1) schwenken kann, und mindestens vier Rotoren (R1, R2, R3, R4, R5) umfasst, wobei jeder Rotor (R1, R2, R3, R4, R5) um eine Drehachse (AR1, AR2, AR3, AR4, AR5) angetrieben und von einer Auflage (5) getragen ist, wobei die Rotoren (R1, R2, R3, R4, R5) jeder Seitengruppe (G1, G2) um mindestens eine zweite Ausschlagachse (B2) und eine dritte Ausschlagachse (B3), die im Wesentlichen parallel zu der Vorschubrichtung (DA) sind, und um eine im Wesentlichen vertikale Ausrichtungsachse (AP), die sich ausgehend von dem Rahmen (2) zwischen der zweiten Drehachse (AR2) und der vierten Drehachse (AR4) befindet, gelenkig miteinander verbunden sind,
wobei das Verfahren ermöglicht, die betrachtete Seitengruppe (G1, G2) aus einer ausgeklappten Betriebskonfiguration, in der die Drehachsen (AR1, AR2, AR3, AR4, AR5) ihrer Rotoren (R1, R2, R3, R4, R5) in einer gleichen Ebene liegen, in eine Transportkonfiguration umzusetzen, in der diese Drehachsen (AR1, AR2, AR3, AR4, AR5) im Wesentlichen horizontal sind, wobei das Verfahren einen Schritt umfasst, der darin besteht, alle Rotoren (R1, R2, R3, R4, R5) um die entsprechende erste Ausschlagachse (B1) in der gleichen Schwenkrichtung wie das jeweilige Außenteil (4) zu schwenken, bis ihre Drehachsen (AR1, AR2, AR3, AR4, AR5) im Wesentlichen horizontal und senkrecht zu der Vorschubrichtung (DA) ausgerichtet sind, Verfahren **dadurch gekennzeichnet, dass** es darin besteht:
- i) die sogenannten orientierbaren Rotoren (R3, R4, R5) in Bezug auf den Rahmen (2) um die Ausrichtungsachse (AP) in einem Winkel zwischen 20° und 60° zu schwenken,
- ii) ein Außenteil (4) der betrachteten Seitengruppe (G1, G2), das den dritten Rotor (R3) und den vierten Rotor (R4) umfasst, in Vorschubrichtung (DA) gesehen, über ein Innenteil (3) dieser Seitengruppe, das den ersten Rotor (R1) und den zweiten Rotor (R2) umfasst, zu schwenken.

10. Verfahren nach Anspruch 9, **dadurch gekennzeichnet, dass** die Schritte i) und ii) sich zumindest teilweise zeitlich überschneiden oder sogar gleichzeitig durchgeführt werden.

## Claims

1. Agricultural machine (1) moving along a direction of advance (DA) in use and comprising a chassis (2) and two side units (G1, G2), each side unit (G1, G2) being articulated on either side of the chassis (2) so as to be able to pivot about a first travel axis (B1) substantially parallel to the direction of advance (DA) and comprising several rotors (R1, R2, R3, R4, R5), each rotor (R1, R2, R3, R4, R5) being driven in rotation about a rotation axis (AR1, AR2, AR3, AR4, AR5) and supported by a support (5), the rotors (R1, R2, R3, R4, R5) of each side unit (G1, G2) being articulated to each other about at least a second travel axis (B2) and a third travel axis (B3) substantially parallel to the direction of advance (DA), and about a substantially vertical orientation axis (AP), each side unit (G1, G2) being able to adopt a deployed configuration of use in which the rotation axes (AR1, AR2, AR3, AR4, AR5) of its rotors (R1, R2, R3, R4, R5) lie in a same plane, and a transport configuration in which these rotation axes (AR1, AR2, AR3, AR4, AR5) are substantially horizontal, each side unit (G1, G2) comprising at least four rotors (R1, R2, R3, R4, R5), the orientation axis (AP) being located between the second rotation axis (AR2) and the fourth rotation axis (AR4) from the chassis (2), so-called adjustable rotors (R3, R4, R5) being able to pivot relative to the chassis (2) about the orientation axis (AP) at an angle between 20° and 60°, and each side unit (G1, G2) comprising an inner part (3) comprising the first rotor (R1) and second rotor (R2) from the chassis (2) and an outer part (4) comprising at least the last two rotors (R3, R4, R5) from the chassis (2),
machine (1) **characterized in that** the outer part (4) can pivot between a position alongside and a position above the inner part (3) seen in the direction of advance (DA).

2. Agricultural machine (1) according to claim 1, **characterized in that** the outer part (4) of each side unit (G1, G2) is longer than its inner part (3).

3. Agricultural machine (1) according to claim 1 or 2, **characterized in that** each side unit (G1, G2) comprises five rotors (R1, R2, R3, R4, R5), and **in that** the adjustable rotors (R3, R4, R5) can pivot about the orientation axis (AP) at an angle of approximately 45° relative to the chassis (2).

4. Agricultural machine (1) according to one of claims 1 to 3, **characterized in that** each side unit (G1, G2) can pivot about the respective first travel axis (B1) in the same pivoting direction as its outer part (4) relative to the respective inner part (3).

5. Agricultural machine (1) according to one of claims 1 to 4, **characterized in that** the orientation axis (AP) is located between the third rotation axis (AR3) and the fourth rotation axis (AR4) from the chassis (2) in the deployed configuration.

6. Agricultural machine (1) according to one of claims 1 to 5, **characterized in that** each rotor (R1, R2, R3, R4, R5) is articulated to the adjacent rotor(s) (R1, R2, R3, R4, R5) via a travel axis (B2, B3, B4, B5).

7. Agricultural machine (1) according to any one of claims 1 to 6, **characterized in that** the orientation axis (AP) is neither coincident nor concurrent with the rotation axes (AR1, AR2, AR3, AR4, AR5) in the deployed configuration.

8. Agricultural machine (1) according to any one of claims 1 to 7, **characterized in that** at least one side unit (G1, G2) can be in an edge working configuration in which the adjustable rotors (R3, R4, R5) are pivoted backwards about the orientation axis (AP) to the rear about the orientation axis (AP) by approximately 20°, starting from the deployed configuration of the side unit (G1, G2) considered.

9. Shifting method for a side unit (G1, G2) of an agricultural machine (1) moving along a direction of advance (DA) in use and comprising a chassis (2) and two side units (G1, G2), each side unit (G1, G2) being articulated on either side of the chassis (2) so as to be able to pivot about a respective first travel axis (B1) substantially parallel to the direction of advance (DA) and comprising at least four rotors (R1, R2, R3, R4, R5), each rotor (R1, R2, R3, R4, R5) being driven in rotation about a rotation axis (AR1, AR2, AR3, AR4, AR5) and supported by a support (5), the rotors (R1, R2, R3, R4, R5) of each side unit (G1, G2) being articulated to each other about at least a second travel axis (B2) and a third travel axis (B3) substantially parallel to the direction of advance (DA) and about a substantially vertical orientation axis (AP) located between the second rotation axis (AR2) and the fourth rotation axis (AR4) from the chassis (2),
the said method enabling shifting the side unit (G1, G2) considered from a deployed configuration of use in which the rotation axes (AR1, AR2, AR3, AR4, AR5) of its rotors (R1, R2, R3, R4, R5) lie in a same plane, to a transport configuration in which these rotation axes (AR1, AR2, AR3, AR4, AR5) are substantially horizontal, the process comprising a step consisting of pivoting all the rotors (R1, R2, R3, R4, R5) about the corresponding first travel axis (B1) in the same pivoting direction as the respective outer part (4) until their rotation axes (AR1, AR2, AR3, AR4, AR5) are oriented substantially horizontally and perpendicularly to the direction of advance (DA), method **characterized in that** it consists in:
- i) pivoting the so-called adjustable rotors (R3, R4, R5) relative to the chassis (2) about the orientation axis (AP) at an angle between 20° and 60°,
- ii) pivoting an outer part (4) of the relevant side unit (G1, G2), comprising the third rotor (R3) and fourth rotor (R4), above an inner part (3) of this side unit, comprising the first rotor (R1) and the second rotor (R2), seen in the direction of advance (DA).

10. Method according to claim 9, **characterized in that** steps i) and ii) overlap at least partially in time, or are carried out simultaneously.
